# EUROPEAN PATENT SPECIFICATION

(11) **EP 4 161 325 B1**
(45) Date of publication and mention of the grant of the patent: **30.07.2025**
(21) Application number: 20829386.0
(22) Date of filing: 17.12.2020
(51) Int. Cl.: A47J 31/06, A47J 31/36

(54) **BEVERAGE PREPARATION SYSTEMS AND PROCESSES, INCLUDING PORTION HOLDER WITH ENHANCED SINGLE PORTION**
GETRÄNKEHERSTELLUNGSSYSTEME UND -VERFAHREN MIT PORTIONSHALTER MIT VERBESSERTEM EINZELTEIL
SYSTÈMES ET PROCÉDÉS DE PRÉPARATION DE BOISSON, COMPRENANT UN SUPPORT DE PORTION AYANT UNE PORTION UNIQUE AMÉLIORÉE

(30) Priority: 04.06.2020 PT 2020116472
(43) Date of publication of application: 12.04.2023
(73) Proprietor: WEADD, LDA, 2430-028 Marinha Grande (PT)
(72) Inventor: FREIRE FALCÃO TELES CARAMELO, Daniel, 1700-141 LISBOA (PT); QUITÉRIO GARCIA CARVALHO, Agostinho Miguel, 2400-842 LEIRIA (PT); DA SILVA GOMES JOSUE , Sonia Raquel, 2500-922 CALDAS DA RAINHA (PT)
(74) Representative: Alves Moreira, Pedro
(86) International application number: PCT/PT2020/050057
(87) International publication number: WO 2021/246889

(56) References cited:
- WO-A1-2015/132203
- CN-U- 203 302 876
- DE-U1- 202016 106 830
- KR-B1- 101 326 682
- US-A1- 2007 186 779
- US-A1- 2011 274 802

## Description

### Field of the invention

The present invention refers to the field of beverage preparation systems and processes based upon extraction of a portion of beverage precursor substance provided in a single portion to an extraction device of a beverage preparation apparatus.

### Prior art

The prior art includes brewing devices presenting a collection space adapted for receiving a portion of beverage precursor substance, whereby said collection space is connected to a lid part by means of a swivelling connection such that the lid part can be operated in open and closed positions.

The WO 97/43939 discloses a brewing device of this type, comprising a dose-holder with a handle and defining a percolating chamber suited for holding a pre-packaged coffee dose, and a lid associated to the dose-holder in order to open and close upon the latter and thus define a second part of the percolating chamber, whereby the lid is hinged onto the dose-holder. The document discloses that there are provided means that can be manually operated to open and close the lid such as to allow the operator to open the lid with the same hand that holds the handle of the dose-holder. In particular, the lid can be actuated by a rod-button operating a leverage associated with elastic means. The elastic means can be in the form of a return spring suited recalling and keeping the lid in a closed position.

The US 5,910,205 provides a further example of such a brewing device. In this case, the brewing device comprises a brew basket that can hold ground coffee and is hinged connected to a lid above of the ground coffee that has a plurality of spaced holed provided there through to distribute water generally uniformly over said bed of ground coffee. The hinged connection of the basket with the lid member seems to be provided by a rod-like portion of the lid being swivelling retained in mutually opposing holes on a peripheral support of the basket next to the opening thereof. The brew basket includes a base and a sidewall having a plurality of fins extending generally radially on the base and further extending along the sidewall.

The WO 2014/063998 A1 discloses a brewing apparatus that is adapted so that can be operatively attached to an external part of a beverage preparation machine. Said brewing apparatus presents a container part that is connected in a swivelling connection to a lid part.

The WO 2015/132203 A1 further discloses a brewing apparatus that presents a container part connected to a lid part by means of a swivelling connection provided at a peripheral portion thereof.

The type of swivelling connection can determine ergonomics and reliability, as it can be affected by intensive use, and be constrained by construction complexity and costs.

Moreover, the widespread market penetration of single use portion capsules mostly produced in metallic and plastic materials is increasingly constrained by environmental issues.

This problem has been addressed by several approaches known in prior art.

One approach is to provide a capsule adapted so that can be reused.

The DE 20 2009 009125 U1 discloses a capsule with a container part hinged connected to a lid part.

The US 8,707,855 B2, the US 8,561,524 B2 and the US 10,154,751 B2 also disclose a capsule-like beverage brewing device that presents a body defining a brew chamber configured to contain a dry beverage medium, and a lid that is removably securable to the body, in particular in a hinged-like connection provided by a sideways supported swivelling rod.

Another one of the approaches is the use of re-usable capsule holders providing users with the option of refilling a capsule with a quantity of, for example, ground and roasted coffee.

Document WO 02/082963 A1 discloses a re-usable beverage filter cartridge of the type of the present invention, whereby a cartridge is configured so that can be collected inside of a brewing device and so that can collect a single portion of a beverage portion.

Document EP 24019445 A1 discloses a device of the type of the present invention, for adapting a food capsule into a capsule holder. Said device comprises a holding portion for holding at least a portion of said capsule, and sealing means for circumferentially adapting to the capsule holder and/or to the fluid injection element, and/or to the capsule outside surface, in a leak-tight manner. The holding portion is hinged connected to a lid portion that further comprises sealing means, for example a circular O-ring rubber seal, to ensure that the contact surface between said holding portion and lid is leak-tight. Moreover, the internal shape of the holding portion can be adapted to enclose a soft pod having substantially flexible walls with a generally discoid shape.

The EP 3089634 B1 also discloses a brewing device of the type of the present invention, whereby a portion holder comprises a container part hinged connected to a lid part and adapted so that can operate with different types of single portions. The lid part comprises a first sealing member and a second sealing member which is different from the first sealing member and configured to seal a second brewing chamber between the lid part and a second holder when the second holder is inserted into a hollow of a brewing unit configured for receiving different types of portable pad and/or capsule holders.

The EP 2907425 B1 discloses a brewing system of the type of the present invention whereby a container part is hinged connected to a lid part, and discloses several types of flow distribution upstream of the edible portion.

The prior art thus includes solutions for adapting brewing devices of beverage preparation machines to operate with individual portions of beverage precursor substance in different types of capsules or pods, but there is a need for further optimizing said adapting devices.

Another coffee machine using single portions is known from KR 101 326 682 B1.

### Description of the invention

The present invention discloses a beverage preparation system that includes a beverage preparation device, such as an extraction device, that can be operated with single portions of beverage precursor substance, such as roasted coffee, tea, and similar, and an adapter device that is configured as a portion holder that can operate inside a portion receiving part of said extraction device and be operated with single portions presenting a compostable material confinement, thereby minimizing the environmental impact associated with envelope materials confining said precursor substance.

A first objective is to provide a system including a portion holder of the aforementioned type and a respective single portion using compostable confinement material and providing enhanced flow distribution characteristics.

This objective is solved according to claim 1, whereby preferred embodiments are disclosed in dependent claims.

An associated objective of the present invention is to provide a system including a single portion and a portion holder adapted so that can be used in an extraction device that comprises a portion receiving part that can be engaged with a flow feeding part, whereby the single portion is adapted to maximize the amount of carried edible substance thereby best occupying the free volume available inside of the portion holder.

This objective is solved according to the present invention by means of a single portion that presents volumetric shape and dimension that are similar to the volumetric shape and dimension of the collection space provided by container and lid parts, whereby a bigger volume fraction of single portion extends downstream and a smaller volume fraction extends upstream of the interface region between container and lid parts, and such that the exterior surface thereof is in the vicinity or in contact with the interior surface provided by said container and lid parts, optionally also with a flow-dispensing part provided on the base wall.

This feature advantageously provides a maximum use of the volume available inside the portion holder, notably for the edible substance containing single portion.

An associated objective is to provide a portion holder of the aforementioned type such that the lid part presents a flow-conducting wall upstream of the single portion that provides better flow distribution of the pressurized flow provided by an injection element of the flow feeding part of extraction device upstream of a single portion inside of the portion holder.

In particular, this objective is solved according to the present invention by means of a portion holder whereby the flow-conducting wall presents a downstream-oriented concave shape presenting a plurality of flow passageways and peripherally surrounded by an annular flow-confining wall.

The flow-conducting wall of the lid portion can present a plurality of flow passageways, arranged on the concave portion of the lid such that there are provided flow passageways aligned with the prevailing flow direction and at different relative heights in respect of the interior space confined by the portion holder.

This advantageously optimizes the flow distribution pattern inside of the portion holder and upstream of the single portion.

An associated objective is to provide a portion holder of the aforementioned type whereby the hinged connection between container and lid portions presents a simple construction, with lower production costs, and operates in reliable manner, preventing being stuck jammed inside the extraction device, and enabling an ergonomic use thereof by a user.

This objective is solved according to the present invention by means of a portion holder whereby the lid part is peripherally hinged connected to the container part by lid connection means that include a material connection of the container part with the lid part.

It is advantageous when the lid connection means are configured such that can be provided by bi-material injection moulding of the container and lid parts such that these can be produced as a single piece.

This advantageously simplifies the hinged connection of the lid and container parts, providing a long lasting reliable and simple connection.

Moreover, the lid connection means can be provided in a band-like element made from an elastically deformable material. In particular, the lid connection means can be made as a same injection moulding part as at least one of retention means and liquid sealing means associated with the container part of portion holder, in particular extending around a downstream sidewall portion thereof and around an upstream-oriented inward protruding step portion in the top region thereof, and configured for retention and liquid sealing of the container part of portion holder inside the portion receiving part of extraction device.

This advantageously optimizes the use of two different materials, or materials with different properties, in the portion holder.

An associated objective is to provide a portion holder of the aforementioned type such that there is provided an effective liquid sealing of the interface region between container and lid parts thereof, thereby preventing any leakage of pressurized flow out of the portion holder.

This objective is solved according to the present invention by means of a portion holder whereby the container part presents a container sealing portion configured as an inward-extending peripheral step of the container part providing an upstream-oriented and inward-protruding support surface for a rim region of single portion and also a support surface for the downstream-oriented peripheral free-edge of the lid part, in particular configured as a lid sealing portion, such that there is provided a sealing engagement of said container and lid sealing portions in case the portion holder is in the closed position.

In particular, the container part can present a container sealing portion configured as an inward-extending peripheral step of the container part providing an upstream-oriented and inward-protruding support surface in an elastically deformable material, whereby said container sealing portion is provided upstream of the downstream sidewall portion and inwards of the upstream sidewall portion.

This advantageously provides for effective and reliable liquid sealing of the interface region between container and lid parts of the portion holder.

It is advantageous when the lid sealing means are configured such that can be provided by bi-material injection moulding of the container and lid parts such that these can be produced as a single piece.

Moreover, the container sealing part can be provided in the same elastically deformable material, and as a material continuation of at least one of retention means and lid connection means associated with the container part of the portion holder, in particular extending around a sidewall and upstream-oriented inward protruding step portion thereof and configured for sealing the interface region of the container and lid parts of portion holder.

This advantageously optimizes the use of two different materials, or materials with different properties, in the portion holder.

An associated objective is to provide a portion holder of the aforementioned type such that can be inserted and reliably retained inside a receiving portion of said extraction device.

In particular, said objective is solved according to the invention by means of a portion holder comprising a container and lid portions whereby the container portion presents retention means arranged on the sidewall of container portion with different configuration and material properties as the remaining sidewall, said retention means being adapted so that can be elastically pressed inwards at a predefined retention position inside a portion receiving part of the extraction device.

The retention means can be provided such that retain the container portion at a position inside the portion receiving part of the extraction device where the lid portion can be operated between a closed position whereby the lid portion sits upon the container portion and does not project above, and an open position swivelled outwards at least 45 degrees from the closed position.

The retention means can be provided on an outwards-oriented indent of the sidewall and be provided on a different material as the remaining sidewall.

The retention means can be configured so that extend outwards and be provided only on a downstream portion of the sidewall, preferentially next to the base wall of the container part.

The retention means can be provided by means of bi-material injection moulding of the container and lid parts such that these can be produced as a single piece.

Moreover, the retention means can be provided in the same elastically deformable material, and as a continuation of at least one of lid connection means and container sealing means associated with the container part of the portion holder, in particular extending to a top region of the sidewall of the container part and around an upstream-oriented inward protruding step portion in the top region thereof, and configured for hinged connection to the lid part and liquid sealing of the container part of portion holder inside the portion receiving part of extraction device.

This advantageously optimizes the use of two different materials, or materials with different properties, in the portion holder.

### List of Figures

The present invention shall be hereinafter described in greater detailed with support of a description of preferred embodiments of main components and respective drawings.

The Figures show:
- Figure 1:: side-cut view diagram of a system and first step of a process according to the present invention;
- Figure 2:: side-cut view diagram of a system and second and third steps of a process according to the present invention, including provision of a portion holder (3) and dropping a single portion (1) inside thereof;
- Figure 3:: side-cut view diagram of a system and fourth step of a process according to the present invention, including introducing the portion receiving part (41) containing the portion holder (3) into the flow provision part (42) of a brewing device (4);
- Figure 4:: side-cut view diagram of a system and third step of a process according to the present invention, including provision of a portion holder (3);
- Figure 5:: side view of an embodiment of an open portion holder (3) in a system according to the invention;
- Figure 6:: perspective top view of open portion holder (3);
- Figure 7:: top view of open portion holder (3);
- Figure 8:: detail view of the lid connection means (6) between container (31) and lid (32) portions of the portion holder (3);
- Figure 9:: perspective side-cut view of open portion holder (3);
- Figure 10:: side-cut views of successive moments of introduction of a portion holder (3) in a extraction device (4) of an apparatus (5) in a system according to the invention;
- Figure 11:: perspective side-cut view of portion holder (3) at an almost closed position;
- Figure 12:: detail side-cut view of the lid connection means (6) of container (31) and lid portions (32);
- Figure 13:: perspective side-cut view of portion holder (3) at a closed position;
- Figure 14:: side-cut view of closed portion holder (3);
- Figure 15:: perspective top view of closed portion holder (3);
- Figure 16:: side view of first embodiment of portion holder (3);
- Figure 17:: side view of second embodiment of portion holder (3);
- Figure 18:: side view of third embodiment of portion holder (3);
- Figure 19:: top view of closed portion holder (3);
- Figure 20:: perspective top view of a portion holder (3) in a non-closed position and containing a single portion (1);
- Figure 21:: side-cut view of a portion holder (3) in a non-closed position and containing a single portion (1);
- Figure 22:: side-cut view of a portion holder (3) in a closed position and containing a single portion (1);
- Figure 23:: side-cut view of a portion holder (3) in a non-closed position and containing a single portion (1), inside of a portion receiving part (41) of extraction device;
- Figure 24:: side-cut view of a portion holder (3) in a closed position and containing a single portion (1), inside of a portion receiving part (41) of extraction device;
- Figure 25:: top view of a second embodiment of a portion holder (3) in an open position;
- Figure 26:: bottom view a second embodiment of a portion holder (3) in an open position;
- Figure 27:: perspective side-cut view of the second embodiment of portion holder (3) and second embodiment of single portion (1);
- Figure 28:: side-cut view of the second embodiment of portion holder (3) and second embodiment of single portion (1).

### Detailed description of preferred embodiments of the invention

The present invention shall be described based upon the general example of a beverage preparation system adapted for operating with single portions (1), such as capsules or pods, in preparing espresso-like coffee, soluble coffee and similar aromatic beverages.

The single portions (1) present a confinement (2) adapted for confining a pre-measured quantity of a beverage precursor substance, such as roast and ground coffee, whereby this confinement (2) is preferentially provided in a compostable material, such as a cellulosic-based material, or similar, and does not include other non-compostable materials, thereby advantageously eliminating environmental waste disposal impacts.

Besides of said single portions (1), such system includes an apparatus (5) with an extraction device (4) adapted so that can collect said single portion (1), when at an open position, and enable exposure thereof to an upstream pressurized fluid flow, usually at a fluid pressure above 2 bar, preferentially above 8 bar, and at a fluid temperature above 80°C, preferentially above 88 °C, when in a closed and operating position, as known in prior art.

Moreover, the general example relates to systems whereby the beverage preparation apparatus (3) includes an extraction device (4) having a portion receiving part (41) provided as stand-alone part, for example configured in a general porta-filter design, presenting a cavity adapted so that can receive a single portion (1) and can be manually inserted for example in a generally draw-like arrangement, into a respective preferentially form fitted flow provision part (42), thereby reaching an operative position thereof.

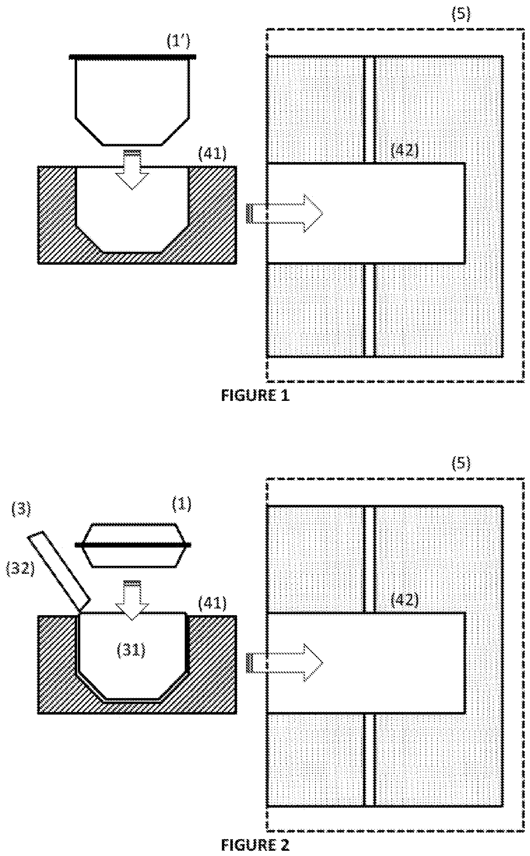

As represented in **Figure 1****,** an embodiment of the system can include a first type of single portion (1') and a beverage preparation apparatus (5) comprising an extraction device (4) having a portion receiving part (41) and a flow provision part (42) that provides pressurized flow upstream of the single portion (1'), for example a plastic capsule, and collection and/or discharge of resulting beverage downstream thereof.

The beverage preparation apparatus (5) can further comprise a flow pressurizing device, such as a hydraulic pump, and a flow heating device, such as a thermoblock. Other aspects of such beverage preparation apparatus (5) are known in prior art such that one herewith abdicated of further details thereof.

In a first step of a process according to the invention, there is provided a portion holder (3) comprising a container (31) hinged connected to a lid portion (32), and adapted so that can receive a single portion (1) different from said first single portion (1') when said lid portion (32) is at an open position, and confine it in liquid sealing manner in case at a closed position.

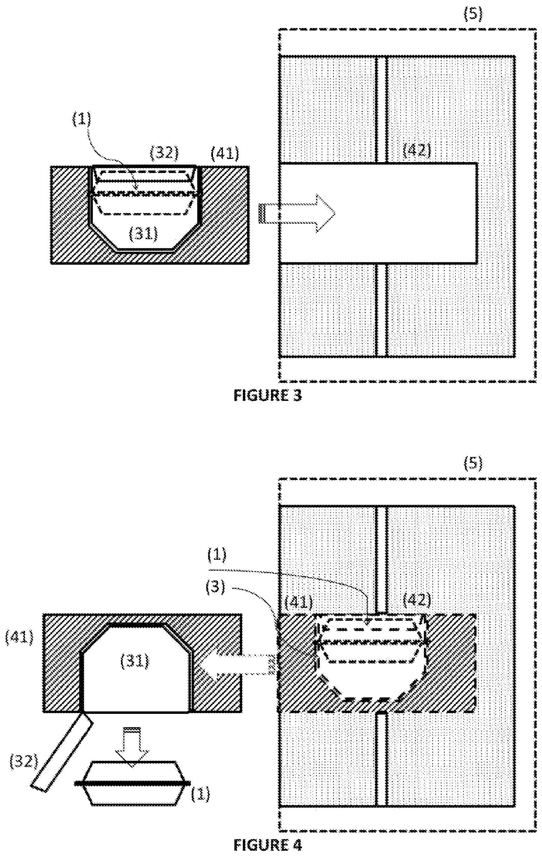

A process according to the present invention is further represented in successive steps in **Figures 2** to **4****.**

In a second step, whereby a portion receiving part (41) is outside with the beverage preparation apparatus (5), un-engaged with the flow provision part (42), a portion holder (3) is inserted into the portion receiving part (41), such that a lid (32) can be operated between open and closed positions. According to an advantageous aspect, the portion holder (3) is inserted in a pressurized fitting manner at least along the lateral portion thereof, such that it is retained inside the portion receiving part (41) by retention means (7) provided on the container portion (31) and does not fall out of it even in case the latter is eventually oriented downwards.

In a third step, a second type of single portion (1) is inserted into the container portion (31) of the portion holder, preferentially by means of manually dropping it inside thereof.

In a fourth step, the portion receiving part (41) is manually inserted into the flow provision part (42), for example in a drawer-like arrangement, such that the receiving part (41) reaches a closed position, and the injection of upstream pressurized flow can be started. In particular, the hinged connection of the lid portion (32) is adapted so that is downwards-pushed by the flow provision part (42) as it gets driven inside thereof and retained in sealed engagement with the container portion (31) whilst inside the flow provision part (42).

The process can further include removing the portion receiving part (41) out of engagement in the flow provision part (42), whereby the hinged connection of the lid portion (32) is adapted so that only raises partially whilst being removed from the downwards-pushing engagement by the flow provision part (41).

The process can further include turning the portion receiving part (41) downwards such that the single portion (1) falls driven by the gravity force out of the container portion (31), but the portion holder (3) further remains retained inside the portion receiving part (41). This feature advantageously enhances the convenience of use of the portion holder (3).

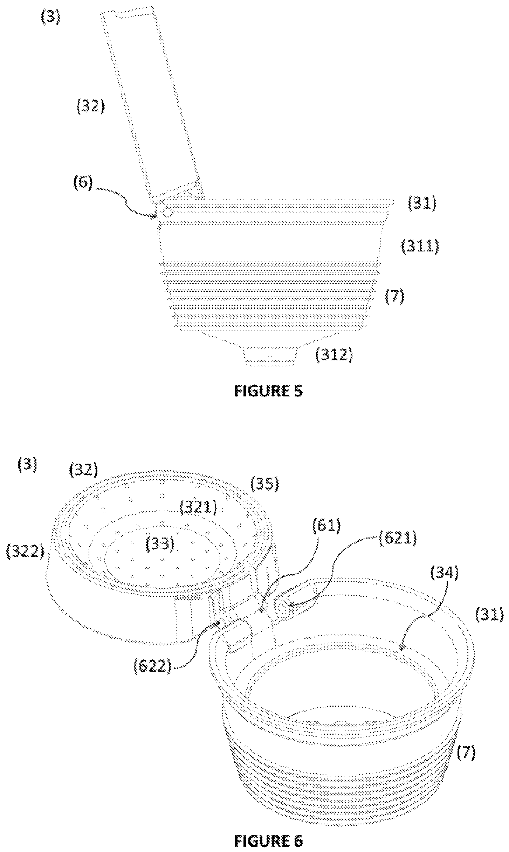

**Figures 5** to **8** represent a preferred embodiment of a portion holder (3) according to the present invention, comprising a container portion (31) with a rotationally symmetric sidewall (311) and base wall (312) defining a cavity space, and a lid portion (32) peripherally hinged to the container portion (31) by means of lid connection means (6) so that can be operated into a closed position whereby the single portion (1) can be confined inside the cavity space.

The container part (31) is adapted so that can be retained inside a portion receiving part (41) of an extraction device (4) that can be manually held and operated in a draw-like manner into an operating position engaged with a flow provision part (42) of said extraction device (4) that can present the general features described in association with previous figures.

As depicted, the portion holder (3) comprises a container part (31) with a sidewall (311) and a base wall (312), and a lid part (32) with a flow-conducting wall (321) extending transversally to the prevailing flow direction and presenting flow passageways (33) and a collar-like flow-confining wall (322) extending laterally peripherally of the flow-conducting wall (321), and jointly confining a collection space extending upstream and downstream of the peripheral interface region between container and lid parts (31, 32).

As referred above, there are portion holders of this type known in the prior art, presenting a hinged connection of the container and lid parts. Given the repetitive and numerous actuation of said hinged connection, this type of connection can be prone to mechanical wear and tear issues, for example in the case of using spring-driven connections, or to ergonomic constrains, such as in the case of lever-like digital actuation supports.

According to a notorious feature of the portion holder (3) according to the present invention, the lid part (32) is peripherally hinged connected to the container part (31) by lid connection means (6) that include a material connection (61) of the container part (31) with the lid part (32), whereby said lid connection means (6) are configured such that can be provided by injection moulding of the container and lid parts (31, 32) such that these can be produced as a single piece.

This advantageously simplifies the hinged connection of the lid and container parts (31, 32), providing a long lasting reliable and simple connection.

It is further advantageous when the lid connection means (6) include a material connection (61) provided in the form of an elastically bendable element, preferentially in a band shape or similar, that extends continuously from the upstream region of the upstream sidewall (311) of container part (31) to the lid part (32), whereby the material connection (61) preferentially includes an elastic material band that is provided such that exerts an elastic force on the lid part (32) upwards in respect of the container part (31), such that the lid part (32) tends towards the open position.

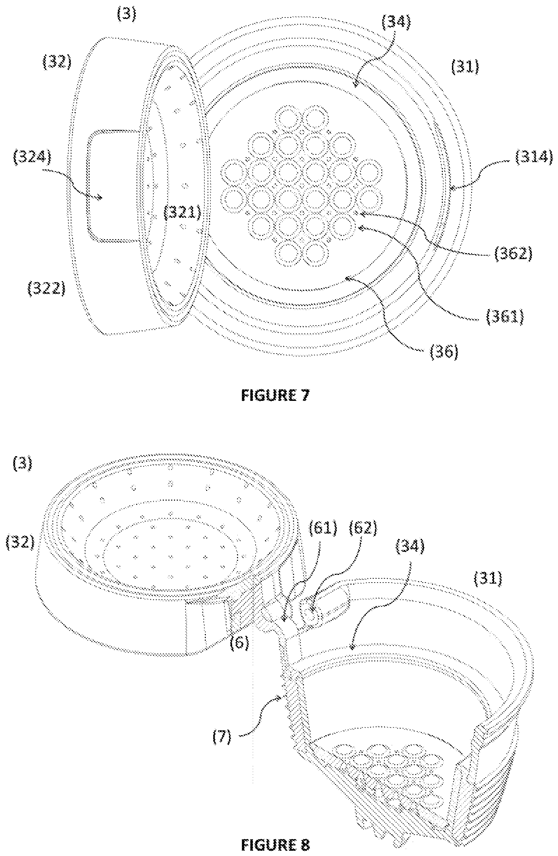

As can be best seen in Figures 6 and 8, the lid connection means (6) can include a connection retention arrangement (62) adapted so that can assist the retention of the lid part (32) at the closed position on the container part (31).

The connection retention arrangement (62) preferentially includes a male-female arrangement (621, 622) in opposing edges of, and arranged sideways in respect of, the material connection (61) and adapted so as to provide a first hard-point retention of the lid part (31) on the container part (31).

The male-female arrangement (621, 622) is preferentially provided on respective peripheral support non-curved portions of the container and lid parts (31, 32) and corresponding to a portion of, and to a projection on, the upstream free-edge region, respectively.

The lid connection means (6) and the holder retention means (7) are provided in a material with similar elastic properties, preferentially in a same material provided that extends continuously from the retention means (7) to the lid connection means (6),

The lid connection means (6) and the holder retention means (7) can be provided in a unique part, or piece, together with the container and lid parts (31, 32) by means of bi-material injection moulding.

The portion holder (3) can further include flow dispensing means (36), preferentially provided as a disk-like single piece, adapted so that can be retained on, preferentially by means of nut-groove peripheral engagement with, the base wall (312) of the container part (31), whereby said flow dispensing means (36) present projections (361) extending upstream from a base portion and configured with a non-puncturing and non-perforating shape, for example with a spherical-like shape with a circular cross-section profile, and further present at least one, preferentially a plurality of, flow passageways (362) configured as holes on the base portion of the flow dispensing means (36).

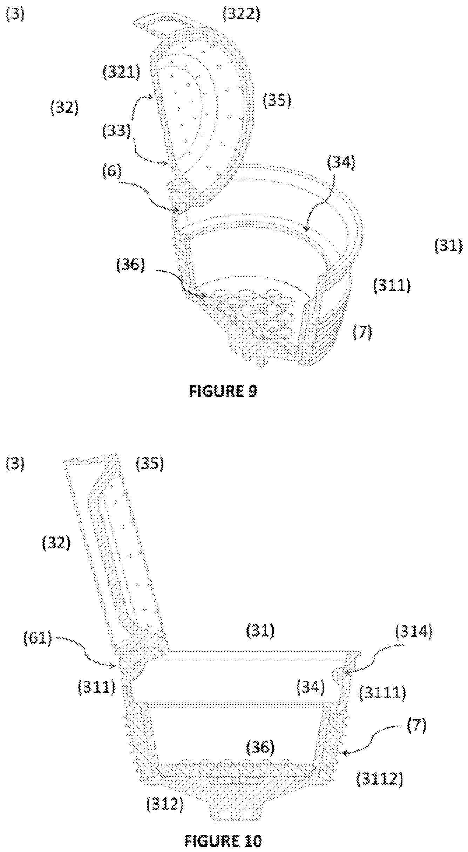

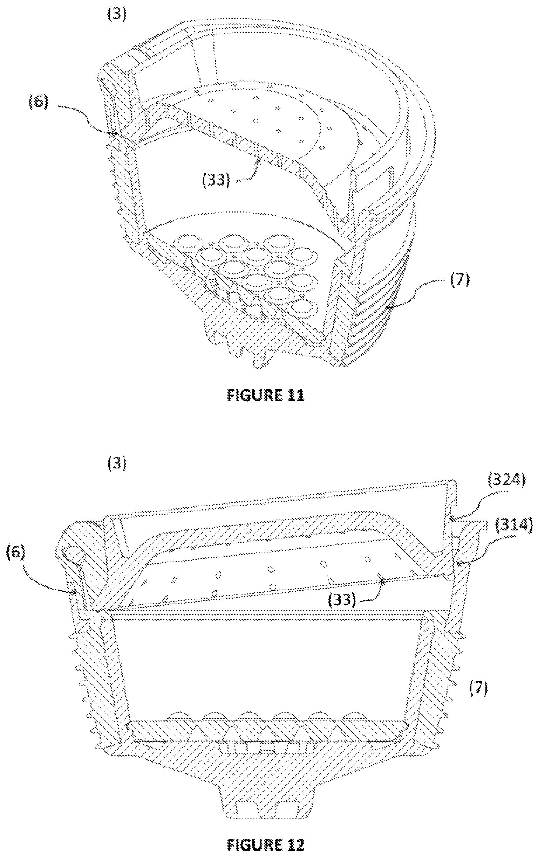

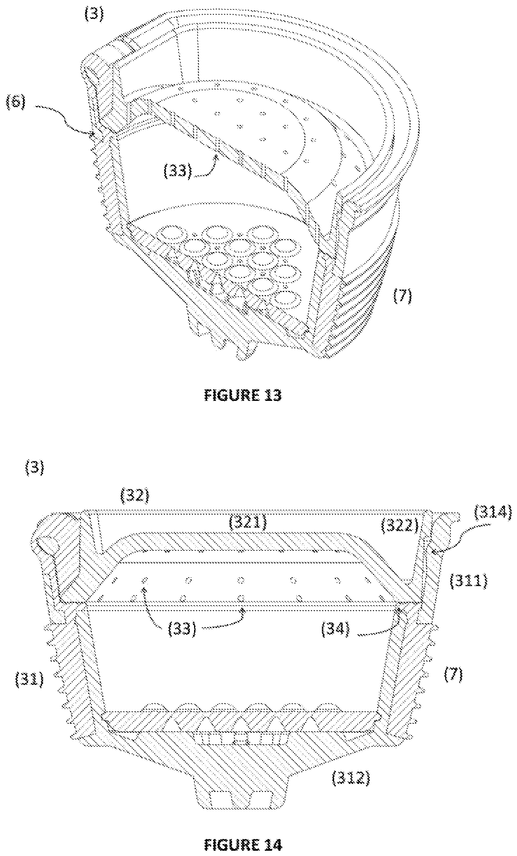

**Figures 9** to **14** show several cut views of the embodiment of portion holder (3) in a system according to the present invention.

The Applicant has tested several embodiments of a portion holder of the type of the present invention, and determined that the retention thereof inside of the portion receiving part (41) of extraction device (4), should be very advantageous in terms of general ergonomic use thereof.

According to a notorious feature, the portion holder (3) according to the present invention presents retention means (7) presenting a different configuration and different material properties from the configuration and material properties of the sidewall (311) of the container part (31), and adapted so that said container portion (31) can be retained in pressurized fitting inside said portion receiving part (41).

In particular, the retention means (7) can be provided in a different material or in a different material composition as the rest of said container part (31).

Moreover, the retention means (7) are provided in an elastically deformable material, for example a rubber-like synthetic material, whereas the container part (31) can be provided in a substantially rigid material.

This feature advantageously provides for a more effective retention of the container part (31), because the retention means (7) thus provide for an enhanced pressurized fitting of the portion holder (3) inside the cavity of the portion receiving part (41) of the extraction device (4).

It is preferred when the container part (31) supports retention means (7) provided in a tubular shape around at least part, preferentially at least most part, more preferentially all of the sidewall (311) such that can be pressed under peripheral strain inside said portion receiving part (41).

Moreover, the retention means (7) can present at least one, preferentially several projections extending outward in respect of at least most of the remaining sidewall (311) of container part (31), preferentially all of the remaining sidewall (311) that sits inside of the portion receiving part (41).

Moreover, at least one of, preferentially both, the retention means (7) and the container part (31) of portion holder (3) are provided in a different material or in a different material composition as the portion receiving part (41).

The retention means (7) can present a non-smooth, preferentially grooved, exterior surface presenting at least one of: a rugosity and a pattern, with projections extending outwards in at least one of: a transversal and parallel direction in respect of the prevailing flow direction, configured so as to generate a material pressure with the corresponding interior surface of said portion receiving part (41) transversal to said prevailing flow direction, whereby the retention means (7) are preferentially provided in a material at least partially elastically deformable.

The retention means (7) can be provided as a plurality of outwards extending projections arranged successively, for example in rows, at least from the vicinity of the peripheral interface region between container and lid parts (31, 32) to the base wall (312).

In particular, the retention means (7) can be provided as outwards extending projections presenting a cross-section profile narrowing from the base towards the free-edge thereof.

As further represented in these drawings, the portion holder (3) comprises a container part (31) with a sidewall (311) that presents an upstream sidewall portion (3111) and a downstream sidewall portion (3112) that is recessed inwards relative to the upstream sidewall portion (3111), and preferentially also relative to an outward extending portion of the base wall (32), and the retention means (7) are provided on a laterally-oriented indent associated with said downstream sidewall portion (3112), such that the retention means (7) extend inwards and outwards in respect of the upstream sidewall portion (3111).

According to another notorious feature of the portion holder (3), the retention means (7) are provided as an injection moulded part that extends through a perimeter transition region between upstream and downstream sidewall portions (3111, 3112) thereby forming at least one of:
- a container sealing portion (34) extending inwards along the interior perimeter and that provides sitting support, in the peripheral interface region between the container and lid parts (31, 32), for a rim portion of the single portion (1) and to a lid sealing portion (35), and
- a material connection (61) of lid connection means (6) that provide the hinged connection of the lid part (32) with the container part (31) at a peripheral region thereof.

This feature advantageously provides for a multiple use and benefit of use, of an elastically deformable material in the portion holder (3), not only in as retention means (7) thereof, but also as at least part of the liquid sealing means and hinged connection means.

As should also be known to the expert in the field, this type of systems, including both extraction devices and single portions, configured for being impinged by pressurized flows, can present liquid sealing issues.

According to another notorious feature of the portion holder (3) according to the present invention, the container part (31) presents a container sealing portion (34) for providing liquid sealing of the portion holder (3) in the closed position, said container sealing portion (34) configured as an inward-extending peripheral step providing an upstream-oriented support surface for a rim region of single portion (1) and also a support surface for the downstream-oriented peripheral free-edge of the lid part (32), in particular configured as a lid sealing portion (35), such that there is provided a sealing engagement of said container and lid sealing portions (34, 35) in case the portion holder (3) is in the closed position.

This feature advantageously provides for effective and reliable liquid sealing of the interface region between container and lid parts (31, 32) of the portion holder (3).

In particular, the container part (31) can present a container sealing portion (34) configured as an inward-extending peripheral step provided in an elastically deformable material, whereby said container sealing portion (34) is provided upstream of the downstream sidewall portion (3112) and inwards of the upstream sidewall portion (3111).

The container sealing portion (34) and the holder retention means (7) can be provided in a material with similar elastic properties, preferentially in a same material or a material with similar composition, that extends continuously from the retention means (7) to the container sealing portion (34), whereby the lid connection means (6) and the holder retention means (7) are provided in a single part or piece as the container and lid parts (31, 32) by means of bi-material injection moulding.

This again provides for the benefits of using an elastically deformable material together with a different material, in particular a rigid material, in the portion holder (3).

The lid part (32) can present a lid sealing portion (35) provided on the downstream-oriented peripheral free-edge of the lid part (32), whereby said lid sealing portion (35) presents a downstream-oriented peripheral nut, for example in a V-like cross-section shape, or similar, and whereby said lid sealing portion (35) is configured to sit under pressure on the container sealing portion (34) thereby providing a sealing engagement of said container and lid sealing portion (34, 35) in case the portion holder (3) is closed.

The container part (31) can support a container sealing portion (34) provided in an elastically deformable material, preferentially a material different from the container part (31), and

The lid part (32) can present a lid sealing portion (35) provided in the same material as the remaining lid part (32), preferentially in a non-elastic rigid material.

The portion holder (3) can comprise container and lid parts (31, 32) with respective container and lid sealing portions (34, 35) that are provided in mutually opposing regions, in particular in a downstream-oriented base region and in a upstream-oriented inwards extending step, respectively, and adapted such that the lid sealing portion (35) sits under closure-driving pressure on the container sealing portion (34) along a continuous peripheral extension in the closed position of the portion holder (3), whereby said closure-driving pressure can be provided by at least one of:
- pressurized engagement of the top region of the lid part (32) with the flow provision part (42) of extraction device (4);
- pressurized engagement of lid retention means (324) corresponding to a closed position of the portion holder (3).

The expert in the field is familiar with the relevance of upstream flow distribution in respect of the upstream-oriented surface of the edible substance inside a single portion (1), in particular if the flow-feeding part (42) of the extraction device (4) presents a single inlet of pressurized flow.

According to another notorious feature, the portion holder (3) comprises a lid part (32) that presents a flow-conducting wall (321) in a generally downstream-oriented convex shape, for example in a frusto-conic shape, configured such that the cavity space confined by the portion holder (3) extends to the vicinity of the upstream feed-edge thereof while providing an upstream-oriented free space extending peripherally in respect of the flow-conducting wall (321) at a distance downstream of the upstream free-edge of the lid part (32). In particular, said flow-conducting wall (321) presents a plurality of flow passageways (33), for example arranged in a matrix-like pattern, extending in a direction similar to the prevailing flow direction and provided on different portions of the downstream-oriented convex shape of the flow-conduction wall (321), at different levels downstream relative to the upstream free-edge of the lid part (32).

This feature advantageously provides for a better flow distribution upstream of the single portion (1) and therefore, enhanced extraction efficiency of the edible substance, such as for example roasted ground coffee or soluble coffee, or similar beverage precursor substances.

Moreover, the portion holder (3) can comprise a lid part (32) that presents a collar-like flow-confining wall (322) extending laterally peripherally of a flow-conducting wall (321) and extending upstream from a lid sit region (323) common to the flow-conducting wall (321), whereby the exterior perimeter of the flow-conducting wall (321) corresponds to at least 80%, preferentially at least 85% of the interior perimeter of the flow-confining wall (322).

The flow-confining wall (322) can extend upstream configuring an upstream free-edge of the lid part (32) such that, in case the portion holder (3) is closed, the upstream free edge of the flow-confining wall (322) can extend at a level that is similar to, preferentially higher by a tolerance than, the peripheral edge of the container part (31).

According to another notorious feature, the portion holder (3) can comprise a lid part (32) that presents a collar-like flow-confining wall (322) laterally extending along the periphery region of a flow-conducting wall (321), said lid part (32) including or supporting at least one of, preferentially all of:
- lid connection means (6; 61, 62) arranged at a first peripheral region thereof and providing swivelling connection with the container part (31);
- lid retention means (324) arranged on a second peripheral region thereof, preferentially opposite to the first peripheral region;
- lid sealing portion (35) extending along a downstream-oriented peripheral edge common to the flow-conducting wall (321).

This arrangement advantageously provides a simple overall construction of the portion holder (3).

The Applicant has tested several possible portion holders in different extraction devices (4), and thereby learned that there is a risk to the user resulting from an unconstrained removal of the portion holder from the extraction device (4), after termination of the pressurized flow injection associated with the beverage extraction, whereby uncontrolled hydraulic pressure-driven opening of the portion holder and unintended spills of hot water may occur.

In this regard, according to another notorious feature of the present invention, the portion holder (3) comprises container and lid parts (31, 32) presenting lid retention means (314, 324) configured so as to provide a user actionable mechanical retention of the lid part (32) on the container part (31), whereby said lid retention means (314, 324) are not arranged next to the hinged connection of the lid and container parts (31, 32).

This feature advantageously provides for reliably securing the lid part (32) to the container part (31), by means of simple user-actionable mechanical arrangement, in particular of a hard-point type, or similar. Moreover, said lid retention means (314, 324) provide an effective actuation of the container and lid sealing means (34, 35).

Moreover, the portion holder (3) comprises container and lid parts (31, 32) presenting lid retention means (314, 324) configured so as to provide mechanical retention of the lid part (32) on the container part (31) by means of the user applying pressure on a peripheral portion of the top region of the lid part (32), enough to drive a lid retention portion (324) past a container retention portion (314).

Moreover, the portion holder (3) comprises container and lid parts (31, 32) presenting lid retention means (314, 324) configured so as to provide mechanical retention of the lid part (32) on the container part (31) even in case the portion holder (3) is not engaged by the flow provision part (42) of the brewing device, preferentially also requiring the user to apply pressure so as to release the retention of the lid part (32) from the container part (31).

Moreover, the portion holder (3) comprises container and lid parts (31, 32) presenting lid retention means (314, 324) configured so as resist the upwards-acting hydraulic pressure build-up inside the confined space of the portion holder (3) associated with flow injection, whereby the lid retention means (314, 324) are preferentially configured such that can provide retention and release thereof by means of a similar gesture and pressure by the user, and preferentially providing haptic perception thereof to the user.

Moreover, the portion holder (3) presents lid retention means (314, 324) arranged opposite to connection means (6), in particular to connection retention means (621, 622) associated with the connection means (6) of the lid part (32) to the container part (31), such that there are provided mutually opposing mechanical retentions of the lid part (32) of portion holder (3), whereby said retentions are preferentially configured so that can be jointly actuated.

Moreover, the portion holder (3) presents lid retention means (314, 324) configured as a localized embossment of the internal surface of the container part (31) operationally aligned with a flattened exterior portion of the flow-confining wall (322) of the lid part (32), such that the lid part (32) can be retained in a closed position whereby a lid sealing portion (35 is pressed downwards against container sealing portion (34).

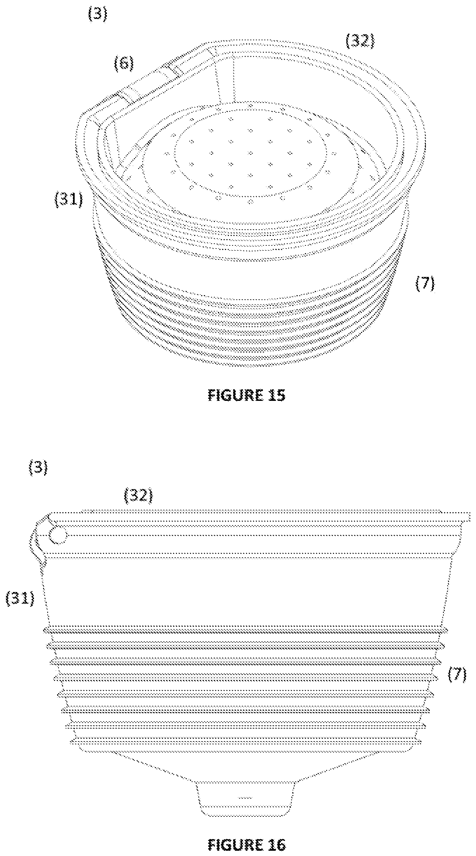

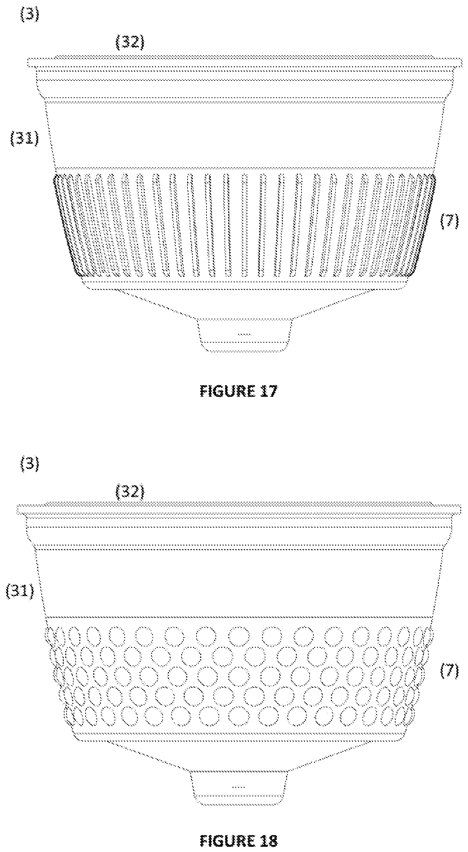

**Figures 15** to **18** show several preferred embodiments of retention means (7) in a portion holder (3) according to the present invention.

In a preferred embodiment the retention means (7) can present a plurality of projections configured as ribs extending outwards and circumferentially around the sidewall of container part (31). Alternatively, the rib-like projections can extend along meridional alignments arranged successively around the external engaging surface of the container part (31) next to the base wall (312) thereof. The wall thickness of each retention rib can be smaller than the interstitial space in-between neighbouring ribs. It is advantageous when the projections do not extend outwards further than the broadest vertical projection of the container part (31).

In a different embodiment the retention means (7) can be configured as spherical or frusto-conical projections arranged in successive rows along the outside surface so as to be engaged by pressurized fitting when the portion holder (3) is inserted into the portion receiving part (41) of the extraction device (4).

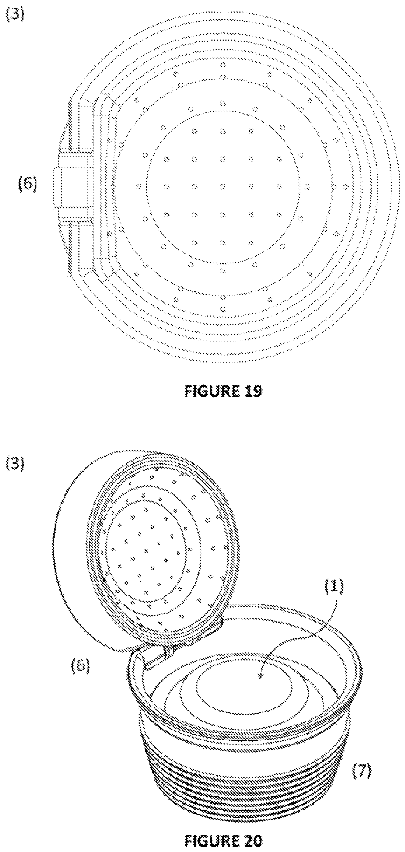

**Figure 19** show a top view of a preferred embodiment of the lid part (32) presenting a plurality of flow passageways (33), and respective relation to the lid connection means (6).

As also referred above and depicted in previous drawings, the flow passageways (33) are provided on different concentric regions of the flow conducting part (321) of the lid part (32), each of said concentric regions extending at different inclinations relative to the prevailing flow direction, such that the upstream flow can be conducted downstream at different relative levels.

It is advantageous when the flow passageways (33) are provided in a regular matrix-like arrangement over the flow conducting part (321), including in a central region that extends substantially transversally to the prevailing flow direction and in a peripheral region that extends at a reduced angle relative to the prevailing flow direction, for example of less than 30°, preferentially less than 20°.

**Figure 20** shows the portion holder (3) at an open position with the single portion (1) inside the container part (31) thereof.

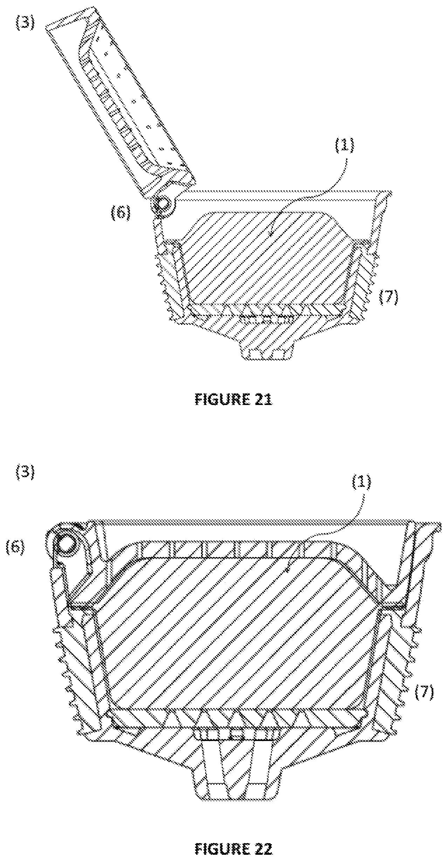

**Figures 21** and **22** show different side-cut views of the portion holder (3) with single portion (1) inside thereof, both in open and closed positions.

According to a notorious feature, the single portion (1) presents volumetric shape and dimension that are similar to the volumetric shape and dimension of the collection space provided by container and lid parts (31, 32),.

This feature advantageously provides a maximum use of the volume available inside the portion holder (3), notably for the edible substance containing single portion (1).

The single portion (1) can present a rim wall portion arranged at a relative level such that the single portion (1) can sit therewith on a support step of the container part (31) that is provided as container sealing portion (34), whereby said container sealing portion (34) is preferentially provided on a elastically deformable material, whereby the most but not all of the beverage precursor substance is provided in the downstream portion thereof.

The single portion (1) can confine an edible substance collection space presenting volumetric shape and volumetric dimension that are similar to the volumetric shape and dimension of the collection space provided by container and lid parts (31, 32), whereby there is provided a beverage flow dispensing means (36) on the bottom region of the container part (31), such that the exterior surface of said single portion (1) is in direct contact with the flow conducting wall (321) of the lid part (32) on the upstream side, and with said beverage flow dispensing means (36) siting on the base wall (312) of the container part (31) on the downstream side, upstream of and in flow communication with a beverage discharge outlet arranged on said base wall (312).

The single portion (1) can confine an edible substance collection space presenting similar volumetric shape and similar volumetric dimension to the volumetric shape and dimension of the collection space provided by container and lid parts (31, 32) such that the top region thereof is in contact with the convex-like interior surface of the flow conducting wall (321) of the lid part (32), and whereby part of the volume of the single portion (1) occupied by the edible substance extends within the volume confined by the lid part (32) upstream of container sealing portion (35).

In this embodiment, a bigger volume fraction of single portion (1) extends downstream and a smaller volume fraction extends upstream of the interface region between container and lid parts (31, 32), and such that the exterior surface thereof is in the vicinity or in contact with the interior surface provided by said container and lid parts (31, 32), optionally also with a flow-dispensing part (36) provided on the base wall (312).

The single portion (1) can be configured such that, inside the closed portion holder (3) and in a non-flow condition, can be pressed downwards by the convex-like interior surface of the flow conducting wall (321).

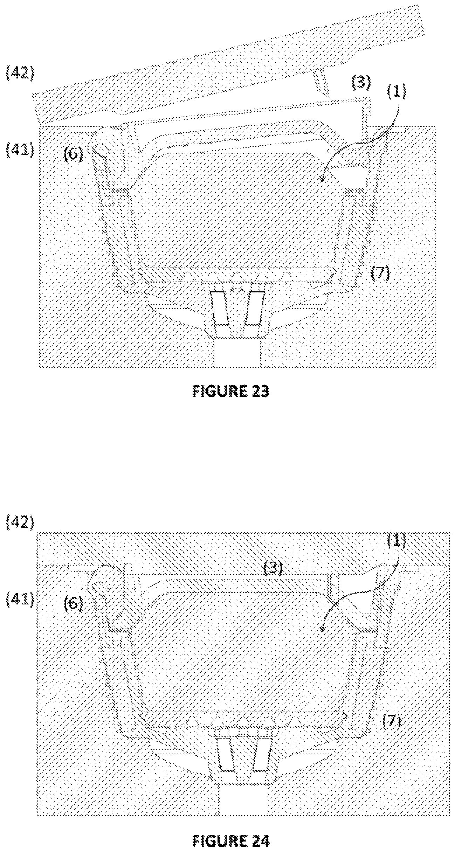

**Figures 23** and **24** represent two particular moments of a process of beverage preparation according to the present invention.

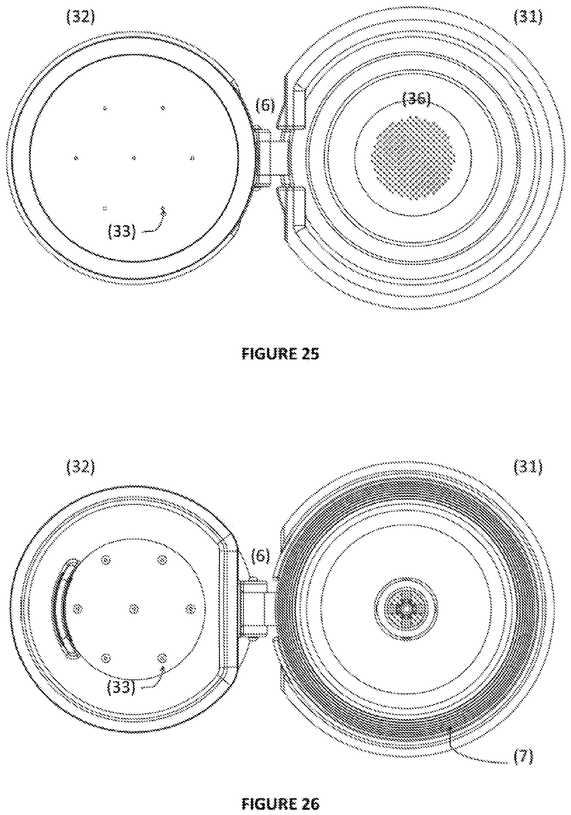

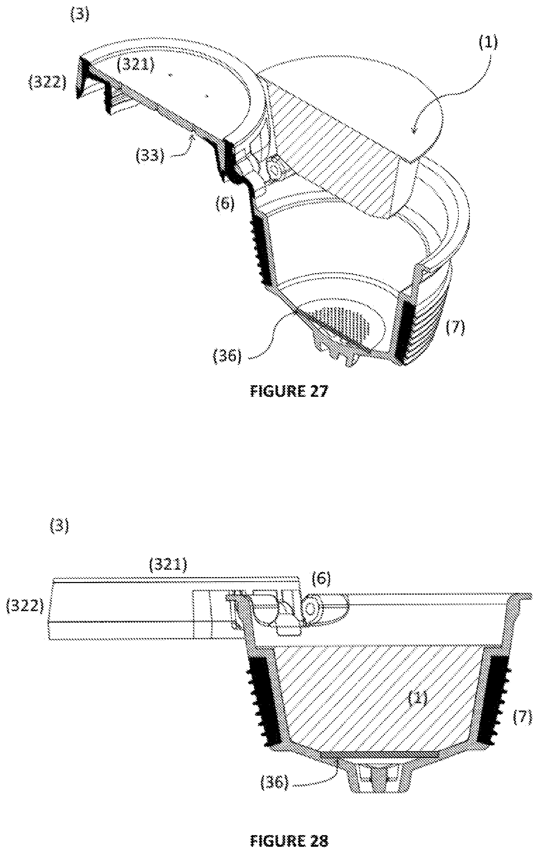

**Figures 25** to **28** represent a second embodiment of portion holder (3) whereby the flow conducting wall (321) presents a flat configuration that is non-recessed relative to the top wall of a single portion (1).

The single portion (1) in this case presents a lid part and a container part, whereby the lid part comprises a planar disk-like top wall that can be coupled coplanar with a rim region such that all edible substance can be confined below said top wall and respective rim region.

In this case the flow dispensing means (36) are provided as a circular plate, preferentially in a metallic or synthetic material, presenting a plurality of neighbouring flow discharge openings and adapted so that can be retained, for example by means of pressured fitting, on an interior-oriented portion of the base wall of portion holder (3), in flow communication with flow outlets thereof.

## Claims

1. Beverage preparation system comprising:
- a single portion (1) comprising a confinement (2) for collecting a beverage precursor substance;
- a portion holder (3) comprising a container part (31) with a sidewall (311) and a base wall (312), and a lid part (32) with a flow-conducting wall (321) presenting flow passageways (33), and jointly confining a collection space extending at least downstream of the peripheral interface region between container and lid parts (31, 32),
said container part (31) being adapted so that can be retained inside a portion receiving part (41) of an extraction device (4) that can be manually held and operated in a draw-like manner into an operating position engaged with a flow provision part (42) of said extraction device (4), the beverage preparation system being **characterized in that**
said lid part (32) being peripherally hinged to the container part (31) by lid connection means (6) so that can be operated to a closed position at which the single portion (1) is confined inside the cavity space, whereby the single portion (1) presents volumetric shape and dimension that are similar to the volumetric shape and dimension of the collection space provided by container and lid parts (31, 32) such that the exterior surface thereof is in contact with the interior surface provided by said container and lid parts (31, 32), optionally also with a flow-dispensing part (36) provided on the base wall (312), whereby the single portion (1) presents a rim wall portion arranged such that the single portion (1) can sit therewith on a support step adapted as container sealing portion (34) of the container part (31), and
**in that** the single portion (1) presents a confinement (2) with sidewalls in a permeable material extending downstream of a ring-like element, wherein said ring-like element provides a peripheral rim coupling two parts of confinement (2), whereby an upstream-oriented confinement part extends upstream less than a downstream-oriented confinement part extends downstream in respect of said ring-like element, and wherein the upstream-oriented surface, or top wall of said single portion (1), presents a smaller area than the downstream-oriented surface, or base wall, thereof.

2. System according to claim 1, **characterized**
**in that** the single portion (1) presents a confinement (2) that encloses an edible substance collection space presenting volumetric shape and volumetric dimension that are similar to the volumetric shape and dimension of the collection space provided by container and lid parts (31, 32), whereby at least the downstream-oriented portion of the confinement (2) is preferentially provided in a flow permeable material and is otherwise devoid of flow outlet means or otherwise adapted so that can be ruptured to provide flow outlets, and
**in that** the single portion (1) presents a confinement (2) provided in a compostable material, such as a cellulosic-based material, or similar.

3. System according to claim 1 or 2, **characterized in that** the single portion (1) presents a confinement (2) that encloses an edible substance collection space presenting similar volumetric shape and similar volumetric dimension to the volumetric shape and dimension of the collection space provided by container and lid parts (31, 32) such that the top region thereof is in contact with the interior surface of the flow-conducting wall (321) of the lid part (32), and whereby part of the volume of the single portion (1) occupied by the edible substance preferentially extends within the volume confined by the lid part (32) upstream of container sealing portion (35).

4. System according to any of claims 1 to 3, **characterized in that** the single portion (1) is configured such that, inside the closed portion holder (3) and in a non-flow condition, the top wall of the confinement (2) can be pressed downwards by the interior surface of the flow conducting wall (321).

5. System according to any one of claims 1 to 4, **characterized in that** the single portion (1) presents a confinement (2) with sidewalls extending in at least one of a frusto-conic and a convex shape downstream of the rim wall portion, and top and bottom walls extending in a planar shape transversally to the prevailing flow direction at different distances relative to the rim wall portion.

6. System according to any one of previous claims 1 to 5,
**characterized**
**in that** the flow-conducting wall (321) is in a downstream-oriented convex shape and is configured such that the cavity space confined by the portion holder (3) extends to the vicinity of the upstream feed-edge thereof while providing an upstream-oriented free space extending peripherally in respect of the flow-conducting wall (321) at a distance downstream of the upstream free-edge of the lid part (32).

7. System according to any one of previous claims 2 to 6,
**characterized**
**in that** the flow-conducting wall (321) presents a plurality of flow passageways (33), for example arranged in a matrix-like pattern, extending in a direction similar to the prevailing flow direction and provided on different portions of the shape, preferentially downstream-oriented convex, of the flow-conduction wall (321).

8. System according to any one of previous claims 1 to 7,
**characterized**
**in that** the portion holder (3) presents beverage flow dispensing means (36) on the bottom region of the container part (31), provided such that the exterior surface of said single portion (1) is in direct contact with the flow conducting wall (321) of the lid part (32) on the upstream side, and with said beverage flow dispensing means (36) siting on the base wall (312) of the container part (31) on the downstream side, upstream of and in flow communication with a beverage discharge outlet arranged on said base wall (312), and
**in that** the beverage flow dispensing means (36), preferentially provided as a disk-like single piece, are adapted so that can be retained on, preferentially by means of nut-groove peripheral engagement with, the base wall (312) of the container part (31), whereby said beverage flow dispensing means (36) preferentially present projections (361) extending upstream from a base portion and configured with a non-puncturing and non-perforating shape, for example with a spherical-like shape with a circular cross-section profile, and said flow dispensing means (36) further present at least one, preferentially a plurality of, flow passageways (362) configured as holes on the base portion of the flow dispensing means (36).

9. System according to any one of previous claims 1 to 8,
**characterized**
**in that** the container part (31) presents a container sealing portion (34) for providing liquid sealing of the portion holder (3) in the closed position, said container sealing portion (34) configured as an inward-extending peripheral step providing an upstream-oriented support surface for a rim region of the single portion (1) and also a support surface for the downstream-oriented peripheral free-edge of the lid part (32), in particular configured as a lid sealing portion (35), such that there is provided a sealing engagement of said container and lid sealing portions (34, 35) in case the portion holder (3) is closed, whereby said container sealing portion (34) is preferentially provided on a elastically deformable material.

10. System according to any one of previous claims 1 to 9,
**characterized**
**in that** the portion holder (3) presents retention means (7) with different configuration and material properties from the remaining sidewall (311) of container portion (31), adapted so that said container portion (31) can be retained in pressurized fitting inside said portion receiving part (41).

11. System according to any one of previous claims 1 to 10,
**characterized**
**in that** said system further includes a beverage preparation apparatus (5) comprising said extraction device (4) and pressurized flow means upstream thereof so that a pressurized fluid can flow in a prevailing direction through said extraction device (4), portion holder (3) and single portion (1) inside thereof.

## Patentansprüche

1. Getränkezubereitungssystem umfassend:
- eine Einzelportion (1), die einen Behälter (2) zum Sammeln einer Getränkevorläufersubstanz umfasst,
- einen Portionshalter (3), der einen Behälterteil (31) mit einer Seitenwand (311) und einer Bodenwand (312) sowie einen Deckelteil (32) mit einer strömungsleitenden Wand (321) umfasst, die Strömungskanäle (33) aufweist und gemeinsam einen Sammelraum begrenzt, der sich zumindest stromabwärts des peripheren Schnittstellenbereichs zwischen dem Behälter- und dem Deckelteil (31, 32) erstreckt,
wobei der genannte Behälterteil (31) so angepasst ist, dass er in einem Portionsaufnahmeteil (41) einer Extraktionsvorrichtung (4) gehalten werden kann, das manuell gehalten und in einer schubladenartig Weise in eine Betriebsposition betätigt werden kann, in der es mit einem Durchflussbereitstellungsteil (42) der genannten Extraktionsvorrichtung (4) in Eingriff steht, wobei das Getränkezubereitungssystem **dadurch gekennzeichnet ist,**
**dass** der genannte Deckelteil (32) durch Deckelverbindungsmittel (6) peripher mit dem Behälterteil (31) gelenkig verbunden ist, so dass er in eine geschlossene Position gebracht werden kann, in der die Einzelportion (1) im Hohlraum eingeschlossen ist, wobei die Einzelportion (1) eine volumetrische Form und Abmessung aufweist, die der volumetrischen Form und Abmessung des durch die Behälter- und Deckelteile (31, 32) bereitgestellten Sammelraums ähnlich sind, so dass ihre Außenfläche mit der durch die Behälter- und Deckelteile (31, 32) bereitgestellten Innenfläche in Kontakt steht, optional auch mit einem an der Basiswand (312) bereitgestellten Durchflussabgabeteil (36), wobei die Einzelportion (1) einen Randwandabschnitt aufweist, der so angeordnet ist, dass die Einzelportion (1) damit auf einer als Behälterverschlussabschnitt (34) des Behälterteils (31) ausgebildeten Stützstufe aufsitzen kann, und dass die Einzelportion (1) einen Behälter (2) mit Seitenwänden aus durchlässigem Material aufweist, der sich stromabwärts eines ringförmigen Elements erstreckt, wobei das genannte ringförmige Element einen Umfangsrand bereitstellt, der zwei Teile des Behälters (2) verbindet, wobei sich ein stromaufwärts ausgerichteter Behältersteil weniger weit stromaufwärts erstreckt als sich ein stromabwärts ausgerichteter Behältersteil stromabwärts in Bezug auf das ringförmige Element erstreckt, und wobei die stromaufwärts ausgerichtete Oberfläche oder obere Wand der Einzelportion (1) eine kleinere Fläche aufweist als die stromabwärts ausgerichtete Oberfläche oder Basiswand davon.

2. System nach Anspruch 1, **dadurch gekennzeichnet,**
**dass** die Einzelportion (1) einen Behälter (2) aufweist, der einen Sammelraum für essbare Substanzen umschließt, der eine Volumenform und Volumenabmessung aufweist, die der Volumenform und Abmessung des durch Behälter- und Deckelteile (31, 32) bereitgestellten Sammelraums ähnlich sind, wobei zumindest der stromabwärts ausgerichtete Teil des Behälters (2) vorzugsweise aus einem strömungsdurchlässigen Material besteht und ansonsten keine Strömungsauslassmittel aufweist oder ansonsten so angepasst ist, dass er zum Bereitstellen von Strömungsauslässen aufgebrochen werden kann, und
**dass** die Einzelportion (1) einen Behälter (2) aus kompostierbarem Material, wie zum Beispiel einem Material auf Zellulosebasis oder dergleichen, aufweist.

3. System nach Anspruch 1 oder 2, **dadurch gekennzeichnet,**
**dass** die Einzelportion (1) einen Behälter (2) aufweist, der einen Sammelraum für die essbare Substanz umschließt, der eine ähnliche Volumenform und ähnliche Volumenabmessung wie die Volumenform und Abmessung des Sammelraums aufweist, der durch Behälter- und Deckelteil (31, 32) bereitgestellt wird, so dass sein oberer Bereich in Kontakt mit der Innenfläche der strömungsleitenden Wand (321) des Deckelteils (32) ist, und wobei sich ein Teil des Volumens der Einzelportion (1), das von der essbaren Substanz eingenommen wird, vorzugsweise innerhalb des Volumens erstreckt, das durch den Deckelteil (32) stromaufwärts des Behälterverschlussteils (35) begrenzt wird.

4. System nach einem der Ansprüche 1 bis 3, **dadurch gekennzeichnet,**
**dass** die Einzelportion (1) so ausgeführt ist, dass innerhalb des geschlossenen Portionshalters (3) und in einem nicht fließenden Zustand die obere Wand des Behälters (2) durch die Innenfläche der strömungsleitenden Wand (321) nach unten gedrückt werden kann.

5. System nach einem der Ansprüche 1 bis 4, **dadurch gekennzeichnet,**
**dass** die Einzelportion (1) einen Behälter (2) mit Seitenwänden aufweist, die sich stromabwärts des Randwandabschnitts in mindestens einer kegelstumpfförmigen und konvexen Form erstrecken, sowie obere und untere Wände, die sich in einer ebenen Form quer zur vorherrschenden Strömungsrichtung in unterschiedlichen Abständen relativ zum Randwandabschnitt erstrecken.

6. System nach einem der vorhergehenden Ansprüche 1 bis 5,
**dadurch gekennzeichnet,**
**dass** die strömungsleitende Wand (321) eine stromabwärts gerichtete konvexe Form aufweist und so ausgeführt ist, dass sich der durch den Portionshalter (3) begrenzte Hohlraum bis in die Nähe seines stromaufwärts gelegenen Zufuhrrands erstreckt, während ein stromaufwärts ausgerichteter freier Raum bereitgestellt wird, der sich in Bezug auf die strömungsleitende Wand (321) in einem Abstand stromabwärts von dem stromaufwärts gelegenen freien Rand des Deckelteils (32) peripher erstreckt.

7. System nach einem der vorhergehenden Ansprüche 2 bis 6,
**dadurch gekennzeichnet,**
**dass** die strömungsleitende Wand (321) eine Vielzahl von Strömungskanälen (33) aufweist, die beispielsweise in einem matrixartigen Muster angeordnet sind, sich in einer Richtung erstrecken, die der vorherrschenden Strömungsrichtung ähnelt, und an unterschiedlichen Abschnitten der vorzugsweise stromabwärts ausgerichteten konvexen Form der strömungsleitenden Wand (321) vorgesehen sind.

8. System nach einem der vorhergehenden Ansprüche 1 bis 7,
**dadurch gekennzeichnet,**
**dass** der Portionshalter (3) Getränkedurchflussabgabemittel (36) am Bodenbereich des Behälterteils (31) aufweist, die so vorgesehen sind, dass die Außenfläche der genannte Einzelportion (1) in direktem Kontakt mit der strömungsleitenden Wand (321) des Deckelteils (32) auf der stromaufwärtigen Seite steht, und dass die genannten Getränkedurchflussabgabemittel (36) an der Bodenwand (312) des Behälterteils (31) auf der stromabwärtigen Seite angeordnet sind, stromaufwärts von und in Strömungsverbindung mit einem an der genannte Bodenwand (312) angeordneten Getränkeauslass, und
**dass** die Getränkedurchflussabgabemittel (36), vorzugsweise als scheibenartiges Einzelstück bereitgestellt, so angepasst sind, dass sie, vorzugsweise mittels eines peripheren Muttern-Nut-Eingriffs mit der Basiswand (312) des Behälterteils (31), festgehalten werden können, wobei die genannten Getränkedurchflussabgabemittel (36) vorzugsweise Vorsprünge (361) aufweisen, die sich stromaufwärts von einem Basisabschnitt erstrecken und mit einer nicht durchstoßenden und nicht perforierenden Form ausgeführt sind, beispielsweise mit einer kugelartigen Form mit einem kreisförmigen Querschnittsprofil, und das genannte Durchflussabgabemittel (36) ferner mindestens einen, vorzugsweise mehrere Strömungskanäle (362) aufweist, die als Löcher auf dem Basisabschnitt des Durchflussabgabemittels (36) ausgeführt sind.

9. System nach einem der vorhergehenden Ansprüche 1 bis 8,
**dadurch gekennzeichnet,**
**dass** das Behälterteil (31) einen Behälterverschlussabschnitt (34) zum Bereitstellen einer Flüssigkeitsabdichtung des Portionshalters (3) in der geschlossenen Position aufweist, wobei der genannte Behälterverschlussabschnitt (34) als nach innen erstreckende periphere Stufe ausgebildet ist, die eine stromaufwärts ausgerichtete Auflagefläche für einen Randbereich der Einzelportion (1) und auch eine Auflagefläche für die stromabwärts ausgerichtete periphere freie Kante des Deckelteils (32) bereitstellt, insbesondere ausgeführt als Deckelverschlussabschnitt (35), so dass ein dichtender Eingriff zwischen den genannten Behälter- und Deckelverschlussabschnitte (34, 35) erfolgt, wenn der Portionshalter (3) geschlossen ist, wobei der genannte Behälterverschlussabschnitt (34) vorzugsweise auf einem elastisch verformbaren Material vorgesehen ist.

10. System nach einem der vorhergehenden Ansprüche 1 bis 9,
**dadurch gekennzeichnet,**
**dass** der Portionshalter (3) Haltemittel (7) mit einer anderen Konfiguration und Materialbeschaffenheit als die verbleibende Seitenwand (311) des Behälterteils (31) aufweist, die so angepasst sind, dass der genannte Behälterteil (31) unter Druck im Inneren des genanntes Portionsaufnahmeteils (41) gehalten werden kann.

11. System nach einem der vorhergehenden Ansprüche 1 bis 10,
**dadurch gekennzeichnet,**
**dass** das genannte System außerdem eine Getränkezubereitungsvorrichtung (5) umfasst, die die genannte Extraktionsvorrichtung (4) und ein vorgeschaltetes Druckströmungsmittel umfasst, so dass eine unter Druck stehende Flüssigkeit in einer vorherrschenden Richtung durch die genannte Extraktionsvorrichtung (4), den Portionshalter (3) und die darin befindliche Einzelportion (1) fließen kann.

## Revendications

1. Système de préparation de boissons comprenant:
- une portion unique (1) comprenant un confinement (2) pour recueillir une substance précurseur de boisson;
- un porte-portion (3) comprenant une partie de récipient (31) avec une paroi latérale (311) et une paroi de base (312), et une partie de couvercle (32) avec une paroi conductrice d'écoulement (321) présentant des passages d'écoulement (33), et confinant conjointement un espace de collecte s'étendant au moins en aval de la zone d'interface périphérique entre les parties de récipient et de couvercle (31, 32),
ladite partie de récipient (31) étant adaptée de manière à pouvoir être retenue à l'intérieur d'une partie réceptrice de portion (41) d'un dispositif d'extraction (4) qui peut être tenu manuellement et actionné de manière à être tiré dans une position de fonctionnement en prise avec une partie de fourniture d'écoulement (42) dudit dispositif d'extraction (4), le système de préparation de boissons étant **caractérisé en ce que**
ladite partie de couvercle (32) est articulée à la périphérie de la partie de récipient (31) par des moyens de connexion de couvercle (6) de manière à pouvoir être actionnée dans une position fermée dans laquelle la portion unique (1) est confinée à l'intérieur de l'espace creux, par lequel la portion unique (1) présente forme et dimensions volumétriques similaires à la forme et aux dimensions volumétriques de l'espace de collecte fourni par les parties de récipient et de couvercle (31, 32), de sorte que sa surface extérieure est en contact avec la surface intérieure fournie par lesdits parties de récipient et de couvercle (31, 32), éventuellement aussi avec une partie distributrice d'écoulement (36) fournie sur la paroi de base (312), par lequel la portion unique (1) présente une partie de paroi de rebord disposée de manière à ce que la portion unique (1) puisse reposer sur une marche de support adaptée en tant que partie de scellement de récipient (34) de la partie de récipient (31), et **en ce que** la portion unique (1) présente un confinement (2) avec des parois latérales dans un matériau perméable s'étendant en aval d'un élément en forme d'anneau, dans lequel ledit élément en forme d'anneau fournit un rebord périphérique reliant deux parties du confinement (2), par lequel une partie du confinement orientée vers l'amont s'étende vers l'amont moins qu'une partie du confinement orientée vers l'aval s'étend vers l'aval par rapport audit élément en forme d'anneau, et dans lequel la surface orientée vers l'amont, ou paroi supérieure de ladite portion unique (1), présente une aire plus petite que la surface orientée vers l'aval, ou paroi de base, de celle-ci.

2. Système selon la revendication 1, **caractérisé**
**en ce que** la portion unique (1) présente un confinement (2) qui entoure un espace de collecte de substance comestible présentant une forme volumétrique et une dimension volumétrique similaires à la forme et à la dimension volumétriques de l'espace de collecte fourni par les parties de récipient et de couvercle (31, 32), par lequel au moins la partie orientée vers l'aval du confinement (2) est de préférence fourni dans un matériau perméable à l'écoulement et est par ailleurs dépourvue de moyens de sortie de l'écoulement ou par ailleurs adaptée de manière à pouvoir être rompue pour fournir des sorties d'écoulement, et
**en ce que** la portion unique (1) présente un confinement (2) fourni dans un matériau compostable, tel qu'un matériau à base de cellulose, ou similaire.

3. Système selon la revendication 1 ou 2, **caractérisé**
**en ce que** la portion unique (1) présente un confinement (2) qui enferme un espace de collecte de substance comestible présentant une forme volumétrique similaire et une dimension volumétrique similaire à la forme et à la dimension volumétriques de l'espace de collecte fourni par les parties de récipient et de couvercle (31, 32), de telle sorte que sa zone supérieure soit en contact avec la surface intérieure de la paroi conductrice d'écoulement (321) de la partie de couvercle (32), et par lequel une partie du volume de la portion unique (1) occupée par la substance comestible s'étende préférentiellement à l'intérieur du volume confiné par la partie de couvercle (32) en amont de la partie de scellement de récipient (35).

4. Système selon l'une des revendications 1 à 3, **caractérisé**
**en ce que** la portion unique (1) est configurée de telle sorte que, à l'intérieur du porte-portion fermée (3) et dans une condition de non-écoulement, la paroi supérieure du confinement (2) peut être pressée vers le bas par la surface intérieure de la paroi conductrice d'écoulement (321).

5. Système selon l'une des revendications 1 à 4, **caractérisé**
**en ce que** la portion unique (1) présente un confinement (2) avec des parois latérales s'étendant selon au moins l'une des formes tronconiques et convexes en aval de la partie de paroi de rebord, et des parois supérieure et inférieure s'étendant selon une forme plane transversalement à la direction d'écoulement dominante à différentes distances par rapport à la partie de paroi de rebord.

6. Système selon l'une quelconque des revendications précédentes 1 à 5, **caractérisé**
**en ce que** la paroi conductrice d'écoulement (321) a une forme convexe orientée vers l'aval et est configurée de telle sorte que l'espace creux confiné par le porte-portion (3) s'étende jusqu'à proximité du bord d'alimentation amont de celui-ci tout en fournissant un espace libre orienté vers l'amont s'étendant à la périphérie par rapport à la paroi conductrice d'écoulement (321) à une distance en aval du bord libre amont de la partie de couvercle (32).

7. Système selon l'une quelconque des revendications précédentes 2 à 6, **caractérisé**
**en ce que** la paroi conductrice d'écoulement (321) présente une pluralité de passages d'écoulement (33), par exemple, disposés selon un schéma matriciel, s'étendant dans une direction similaire à la direction dominante de l'écoulement et fournis sur différentes portions de la forme, préférentiellement convexe orientée vers l'aval, de la paroi de conduction d'écoulement (321).

8. Système selon l'une quelconque des revendications précédentes 1 à 7, **caractérisé**
**en ce que** le porte-portion (3) présente des moyens de distribution d'écoulement de boisson (36) sur la zone inférieure de la partie de récipient (31), fournis de telle sorte que la surface extérieure de ladite portion unique (1) est en contact direct avec la paroi conductrice d'écoulement (321) de la partie de couvercle (32) sur le côté amont, et avec lesdits moyens de distribution d'écoulement de boisson (36) situés sur la paroi de base (312) de la partie de récipient (31) du côté aval, en amont et en communication d'écoulement avec une sortie d'évacuation de boisson disposée sur ladite paroi de base (312), et
**en ce que** les moyens de distribution d'écoulement de boisson (36), de préférence sous forme d'une pièce unique en forme de disque, sont adaptés pour être retenus, de préférence au moyen d'un engagement périphérique par écrou et rainure, sur la paroi de base (312) de la partie de récipient (31), par lequel lesdits moyens de distribution d'écoulement de boisson (36) présent de préférence des projections (361) s'étendant en amont d'une partie de base et configurées avec une forme qi ne perce pas et qui est non perforante, par exemple avec une forme de type sphérique avec un profil de section transversale circulaire, et lesdits moyens de distribution d'écoulement (36) présentent en outre au moins un, de préférence une pluralité, de passages d'écoulement (362) configurés comme des trous sur la partie de base des moyens de distribution d'écoulement (36).

9. Système selon l'une quelconque des revendications précédentes 1 à 8, **caractérisé**
**en ce que** la partie de récipient (31) présente une partie de scellement de récipient(34) pour assurer l'étanchéité au liquide du porte-portion (3) en position fermée, ladite partie de scellement de récipient(34) configurée comme une marche périphérique s'étendant vers l'intérieur fournissant une surface d'appui orientée vers l'amont pour une zone de rebord de la portion unique (1) et également une surface d'appui pour le bord libre périphérique orienté vers l'aval de la partie de couvercle (32), en particulier configuré comme une partie de scellement du couvercle (35), de manière à ce qu'il y ait un engagement d'étanchéité des dites parties de scellement du récipient et du couvercle (34, 35) dans le cas où le porte-portion (3) est fermé, par lequel ladite partie de scellement de récipient (34) est de préférence fournie sur un matériau élastiquement déformable.

10. Système selon l'une quelconque des revendications précédentes 1 à 9, **caractérisé**
**en ce que** le porte-portion (3) présente des moyens de rétention (7) avec une configuration et des propriétés matérielles différentes de la paroi latérale restante (311) de la portion de récipient (31), adaptés pour que ladite portion de récipient (31) puisse être retenue dans un raccord pressurisé à l'intérieur de ladite partie réceptrice de portion (41).

11. Système selon l'une quelconque des revendications précédentes 1 à 10, **caractérisé**
**en ce que** ledit système comprend en outre un appareil de préparation de boissons (5) comprenant ledit dispositif d'extraction (4) et des moyens d'écoulement sous pression en amont de celui-ci de sorte qu'un fluide sous pression puisse s'écouler dans une direction dominante à travers ledit dispositif d'extraction (4), le porte-portion (3) et la portion unique (1) à l'intérieur de celui-ci.
